# EUROPEAN PATENT APPLICATION

(11) **EP 0 762 319 A2**
(43) Date of publication of application: **12.03.1997**
(21) Application number: 96306048.8
(22) Date of filing: 20.08.1996
(51) Int. Cl.: G06K 11/18

(54) **Graphical input apparatus and method**

(30) Priority: 24.08.1995 US 518932
(71) Applicant: SYMBIOS LOGIC INC., Fort Collins, Colorado 80525 (US)
(72) Inventor: Miquelon, Mark, Colorado Springs, CO 80906 (US); Callicott, Stephen P., Colorado Springs, CO 80917 (US); Skoog, Steven K., Colorado Springs, CO 80917 (US)
(74) Representative: Gill, David Alan

(57) **Abstract**

The invention provides for a method and apparatus for utilizing a plurality of styli (502, 504) (i.e. pens) in conjunction with a common graphics writing surface (300) (i.e. digitizing tablet). Each of the plurality of styli (502, 504) generates information which uniquely identifies the stylus to the control circuits of the graphical writing surface (300). The methods and apparatus may be applied, for example, to cordless pens used in portable "pen computing" applications, or, for example, in desktop applications having interface cables attached to the graphics writing surface and the plurality of styli. One exemplary embodiment of the invention discloses its use with a graphics writing pen which indicates its position on the graphics writing surface (300) to the control circuits by inducing an alternating electric field current to the four corners (A, B, C, D) of an indium tin oxide (ITO) layer of the graphics writing surface. In such an exemplary application, any of several well known techniques may be multiplex the identification information in the induced current signals. For example, each pen (502, 504) may utilize a different frequency so that frequency division multiplexing methods may be applied. Other techniques may include phase shifting of the induced alternating signals, or generally modulating/demodulating an identification data sequence unique to each pen.

## Description

The present invention relates to a graphical input apparatus and method for a computer system and in particular, but not exclusively, to graphical computing applications which utilize a pen or stylus in conjunction with a graphics tablet or writing surface to provide electronic graphical input from a computer user. More particularly, the present invention relates to methods and apparatus which permit the use of a plurality of pens or styli in conjunction with a single digitizing surface or graphics writing surface.

Many graphical computing applications require graphical input from a computer user. One common type of device for providing such graphical input is a pen or stylus applied to a graphics tablet or writing surface. The pen or stylus, in conjunction with the tablet or writing surface, produces electrical signals which are converted to an X-Y coordinate pair indicative of the pen's position in two dimensions on the tablet or surface. Related types of devices can provide positioning information in three dimensions. In the rapidly evolving domain of portable computing, applications which use pens or styli with a writing surface are frequently referred to as "pen computing" applications. Other more traditional graphical computing applications which digitize geometric locations in either two or three dimensions also use similar pens or styli.

As utilized herein, a pen is considered to be synonymous with a "stylus." Similarly, a graphics tablet is to be considered a synonym for a writing surface or digitizing surface. Graphical input devices which include a stylus or pen and a graphics tablet or surface are frequently referred to as "digitizer" or "digitizing devices."

In pen computing applications, it is often desirable to use a plurality of pens wherein each pen (or stylus) is interpreted by the application to have a different semantic meaning. For example, each of a plurality of pens might represent a different color or a different type of graphical object in the computing application. Or, for example, each stylus (or pen) might be utilized to provide movement commands for each of several graphical objects in a single pen computing application, or each might be used in conjunction with a different pen computing application or to identify a particular user.

However, there has been no method or apparatus defined to provide for detection or isolation of signals from each of a plurality of pens or styli. In present graphic tablet designs, simultaneous use of a plurality of pens or styli would likely generate signals or information interpreted by the pen computing application to represent the geometric centre (or average) of the plurality of pens as though a single pen were used at that centre (or average) position.

The present invention seeks to provide for graphical computing apparatus having advantages over known such apparatus.

According to one aspect of the invention there is provided graphical input apparatus for a computer system and comprising a stylus arranged to be moved within a range of geometric coordinates, means for sensing the geometric coordinates of said stylus and means for communicating said coordinates to said computer system characterised in that said stylus includes means for distinguishing said stylus from other styli of said apparatus, and determing means associated with the sensing means and said means for distinguishing said stylus and for determining the geometric coordinates of each of said styli.

According to another aspect of the present invention there is provided a graphical input method for a computer system comprising determining the geometric location of a stylus and communicating said geometric location to said computer system and characterised by the step of distinguishing said stylus from each of a plurality of styli by a characteristic unique to each of said plurality of styli.

The present invention solves the above and other problems, and thereby advances the useful arts, by providing methods and apparatus which permit the simultaneous operation of a plurality of pens or styli in conjunction with a single graphics tablet or writing surface. Specifically, the present invention discloses the use of a unique identification characteristic associated with each of a plurality of pens or styli to be used simultaneously with a common graphics tablet or writing surface. The electrical signals generated by the multiple styli in simultaneous use with a common graphics tablet are multiplexed onto common conductive paths. A circuit associated with the graphics tablet or writing surface is capable of demultiplexing the multiplexed signals to isolate the signals generated by each individual stylus. With the signals for each stylus so isolated, the position of each stylus on the graphics tablet or writing surface may be detected and utilized by the pen computing applications running on an associated CPU.

In one exemplary preferred form, designs used in the WriteTouch™ pen produced by Symbios Logic Incorporated (previously AT&T/NCR) may be applied to the present invention. In the WriteTouch™ designs, the display surface is adapted with an indium tin oxide (ITO) writing surface layer to provide resistivity to electrical current flow. Conductors attached to the four corners of the ITO writing surface receive any electric current flowing in the ITO writing surface. A battery powered, cordless stylus generates an alternating electric field at its respective conductive tip. The alternating electric field at the stylus tip induces a current flow in the ITO writing surface when the stylus tip is applied to the surface. Due to the resistivity of the ITO writing surface, the current flow to each of the four corners of the rectangular ITO writing surface is inversely proportional to the distance from the stylus tip to the respective corner. Less current flows to the corner furthest from the stylus tip while more current flows to the corner closest to the stylus tip. A control circuit of the WriteTouch™ design receives the current flows from the four corners of the ITO writing surface and calculates therefrom the position of the stylus on the ITO writing surface.

The present invention improves upon the WriteTouch™ designs by utilizing a plurality of such styli. Each stylus is adapted to generate a unique characteristic used by the WriteTouch™ control circuits to identify the stylus from among the plurality of styli as well as the position of the stylus. This permits a plurality of styli to be utilized in pen computing applications or other graphical computing application areas. The combination of alternating electric field signals generated by simultaneous use of a plurality of styli is received at the four corners of the ITO writing surface. The electrical signals generated by the multiple styli in simultaneous use are multiplexed on the common conductive paths attached to each of the four corners of the ITO writing surface. The control circuits then demultiplex the signals to detect and isolate which styli are presently in use on the ITO writing surface as well as the present position of each stylus so isolated.

Any of several well known techniques may be utilized to multiplex or modulate and demultiplex or demodulate the combination of stylus signals on the ITO writing surface. Exemplary of such well known techniques is the use of frequency division multiplexing or time division multiplexing to isolate signals generated by one pen from signals of another pen. Time division multiplexing techniques, well known to those of ordinary skill in the art, may also be applied in the present invention to mux and demux the combined signals of a plurality of styli in simultaneous use. Another well known technique involves the generation of a unique identifying code by each stylus and transmission of the identifying code to a control circuit for isolating the location of each of the multiple styli.

The "writing surface", as used herein, is also commonly referred to as a "graphics tablet" or "digitizing tablet." Though such devices are commonly known in the art as two-dimensional digitizing devices, the methods and apparatus of the present invention may be equally applied to three-dimensional digitizing devices. Similarly, "pen" and "stylus" are used interchangeably and may represent other similar devices which generate information regarding their geometric position, either in two or three dimensions.

The present invention therefore advantangesusly provides apparatus, and associated methods, for utilizing a plurality of styli in conjunction with a graphics writing surface.

Also, the invention can provide apparatus and associated methods for isolating signals from a plurality of styli used in conjunction with a common graphics writing surface.

Thus, the present invention is particularly advantageous in providing apparatus and associated methods for detecting the positions of multiple styli within a geometric region of a graphics writing surface.

The invention therefore allows for the simultaneous use of a plurality of styli or pens on a common graphics tablet of writing surface.

The invention is described further hereinafter, by way of example only, with reference to the accompanying drawings in which:
FIG. 1 shows a typical portable pen computing application using multiple styli in accordance with the present invention;
FIG. 2 shows a typical desktop computing application using multiple styli in accordance with the present invention;
FIG. 3 shows a stylus in use with a writing surface in accordance with techniques known in the art;
FIG. 4 shows a stylus in use with a writing surface in accordance with techniques known in the art;
FIG. 5 shows one embodiment of the present invention in which a plurality of styli are used in conjunction with a common writing surface;
FIG. 6 is a graph of the signal waveforms generated by one of the styli shown in FIG. 5;
FIG. 7 is a graph of the signal waveforms generated by another of the styli shown in FIG. 5;
FIG. 8 is a graph of the signal waveforms depicted in FIGS. 7 and 8 and superposed with a fixed phase offset; and
FIG. 9 shows a typical stylus which may be used in conjunction with an embodiment of the present invention.

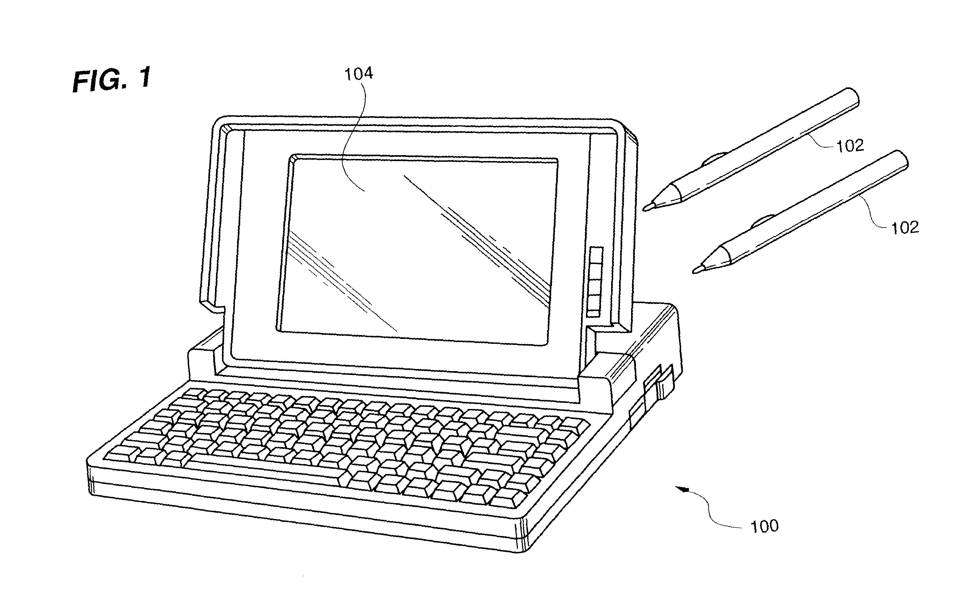

FIG. 1 depicts a typical application of the multiple styli designs of the present invention. Portable computing system 100 includes multiple styli 102, and a display/writing tablet surface 104. Such applications are commonly referred to as "pen computing" applications wherein each styli 102 may be used in a manner typified by a standard pen to write upon display/writing surface 104. As discussed below in detail, each stylus 102 is a self-contained battery powered device capable of generating unique information for identifying its position on display/writing tablet surface 104 as well as distinguishing itself from other styli 102.

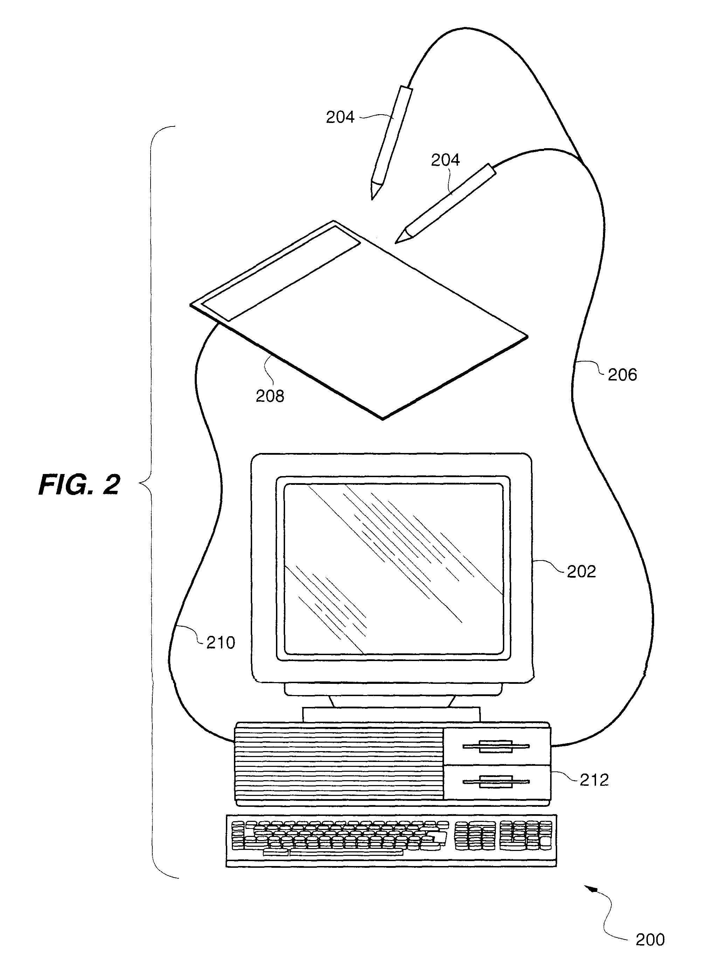

FIG. 2 depicts a second typical application of a multiple styli design embodying the present invention. In FIG. 2, a desktop computing workstation 200 includes central processing unit (CPU) 212 and display 202. Graphics tablet 208 is connected to I/O-interfacing components (not shown) within CPU 212 via cable 210. Multiple styli 204 are connected to I/O interfacing elements (not shown) within CPU 212 via cable 206. As depicted in FIG. 2, each stylus 204 supplies unique identifying information when used in conjunction with writing tablet 208. Information is exchanged between styli 204 and CPU 212 through cable 206. In addition, required power and ground paths may be provided from CPU 212 to styli 204 over cable 206. Likewise, information signals, power, and ground may be supplied over cable 210 between writing tablet 208 and CPU 212.

It can be seen from FIGS. 1 and 2 that the multiple styli designs of the present invention may be applied to both portable computing applications as well as stationary desktop computing applications. Similarly, the cordless stylus design depicted in FIG. 1 could as easily be applied to the stationary computing environment of FIG. 2 and the cabled (tethered) stylus design of FIG. 2 could be applied to the portable computing environment of FIG. 1. Though the remainder of the current description focuses on portable computing applications, it should be appreciated that similar concepts and designs may be applied in the stationary desktop computing environment.

In the portable computing environment depicted in FIG. 1, an indium-tin-oxide (ITO) conductive layer is applied atop the flat raster display panel surface of the portable computer. The use of ITO conductive layers for application in graphics writing surfaces is well known in the technology. The WriteTouch™ pen and its associated writing surface designed and marketed by Symbios Logic, Inc., (previously NCR and AT&T) is an example of such ITO technology applied to a portable computing application. A self-contained stylus device 102 of FIG. 1 provides an alternating electric field at its tip. Applying the stylus tip to the ITO conductive layer induces an alternating electric current to flow through the corner connections of the ITO layer. The AC field induced in the ITO layer flows to the four corners of the rectangular ITO surface, and is received at each corner by circuits which convert the current flow into voltage. The ITO layer is slightly resistive to the current flow. The current flow to each of the four corners is proportional to the distance between the point of the stylus in contact with the ITO surface and each respective corner. A controller chip embedded within the WriteTouch™ control electronics calibrates the raw X-Y position determined by the relative current measurements at each corner converting them into normalized coordinates for transmission to the CPU of the portable computing device 100.

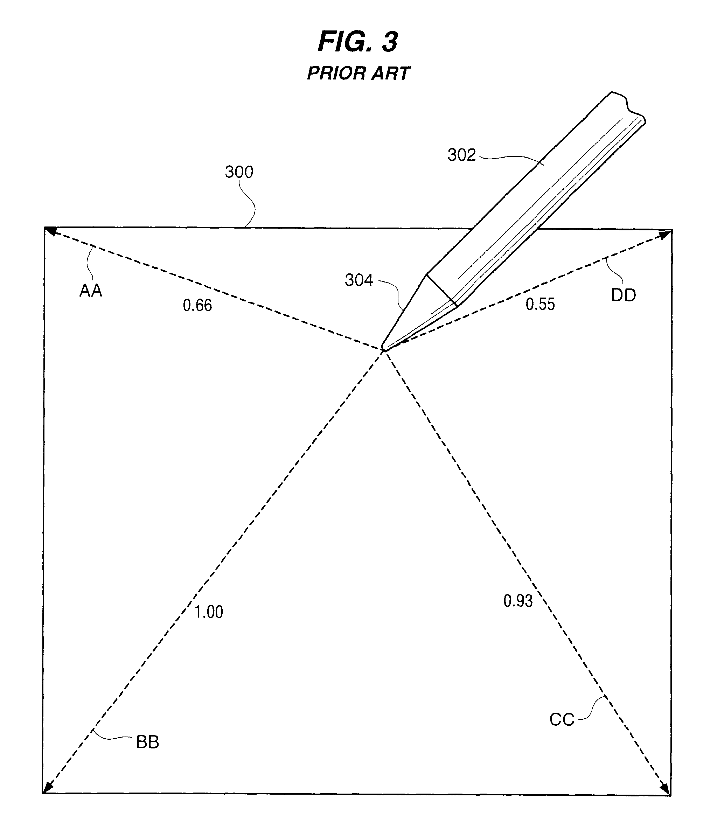

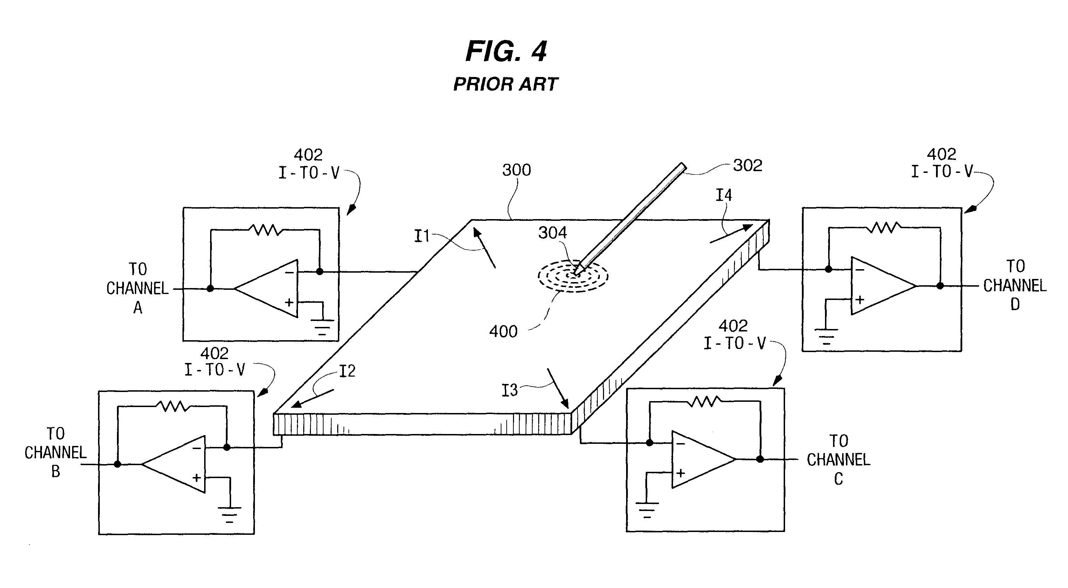

FIGS. 3 and 4 depict a single stylus 302 working in conjunction with an ITO writing surface 300. Tip 304 of stylus 302 contacts ITO writing surface 300 at a point furthest from the lower left corner on the path BB, and closest to the upper right corner on a path DD. The distance AA on the ITO writing surface 300 from the point of contact of tip 304 to the upper left corner and the distance CC to the lower right corner is also shown. The longest distance from the four corners is normalized to a value of 1 as indicated on the path BB. The distances from tip 304 to each of the other three corners, AA, CC, and DD, are shown with their distances scaled to the normalized unit distance associated with path BB. Specifically, path AA is a normalized distance of.66 relative to path BB, path CC has a normalized distance of.93, and path DD has a normalized distance of .55. These normalized distances are inversely proportional to the alternating electric current which flows from tip 304 of stylus 302 to each of the four corners of ITO writing surface 300.

As shown in FIG. 4, the tip 304 of stylus 302 applies an alternating electric field through its tip 304 onto ITO writing surface 300. The alternating AC field induces an alternating current flow in the ITO surface 300 which spreads the four corners as indicated by labeled arrows I1,I2,I3, and I4. Attached to each corner of the ITO writing surface 300 is a current to voltage converter circuit 402. The current to voltage converter circuits 402 convert the current induced at each respective corner to a normalized voltage for each of four channels A, B, C, and D. The resistance in each path from the point of contact of the tip 304 of stylus 302 to the corners of ITO writing surface 300 is proportional to the distance of the path and is therefore inversely proportional to the electric current induced to each corner. In other words, as depicted in FIG. 3, the lowest current is induced to the corner of path BB (having a normalized distance of 1) while the highest current is induced to the corner of path DD (having a normalized distance of .55). The currents induced in path AA (having a normalized distance of .66) and path CC (having a normalized distance of .93) are intermediate these lowest and highest current values on path DD and BB respectively. The voltages produced by I-TO-V circuits 402 attached to each corner of ITO writing surface 300 are therefore directly proportional to the length of the respective paths from the tip 304 of stylus 302 to each respective corner of ITO writing surface 300. A controller circuit ,as is known in the WriteTouch™ technology, determines the absolute position of the tip of stylus 302 as applied to ITO writing surface 300. The controller circuit receives the voltages produced by I-TO-V circuits 402 from four conductors, one from each corner of ITO writing surface 300. The control circuit then computes the absolute position of tip 304 as applied writing surface 300 and transmits those coordinates to the CPU of the computing system for further utilization in graphical computing application.

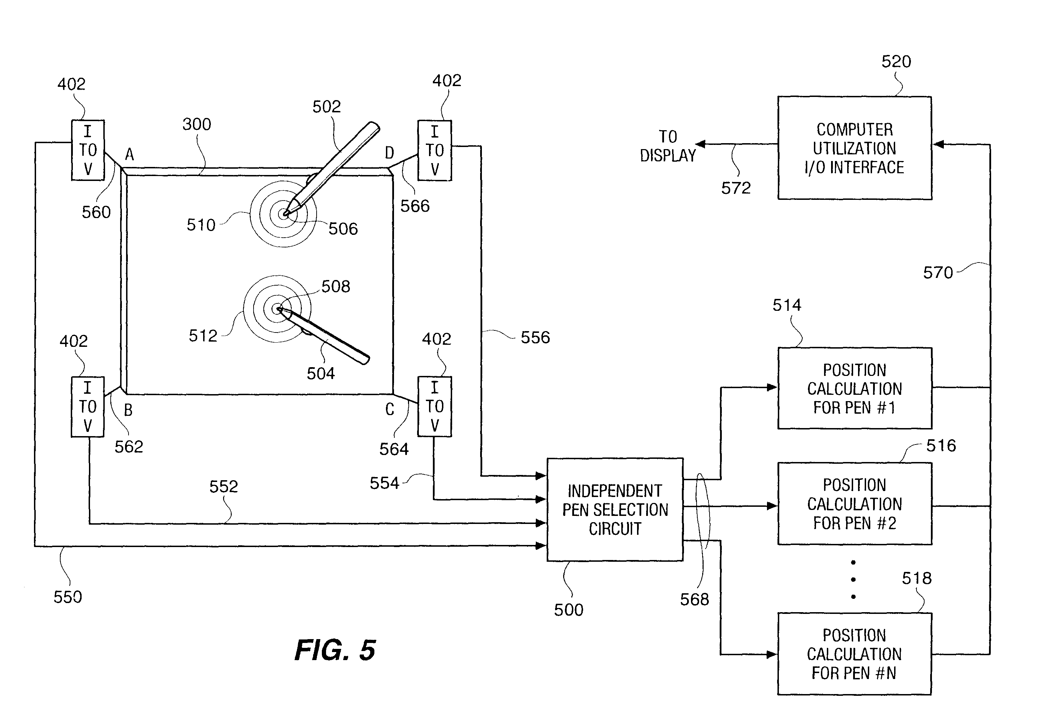

FIG. 5 depicts the use of multiple styli in conjunction with ITO writing surface 300. A first stylus 502 applies an alternating electric field 510 through its tip 506 onto ITO writing surface 300. A second stylus 504 similarly applies an alternating electric field 512 through its tip 508 onto ITO writing surface 300. Since the multiple styli, 502 and 504, apply their electric fields, 510 and 512 respectively, at differing positions on ITO writing surface 300, the combination of alternating currents induced in ITO writing surface 300 is sensed at the four corners A, B, C, D of ITO writing surface 300 I-TO-V circuits 402 are attached to each corner A, B, C, and D, of ITO writing surface 300 by conductors 560, 562, 564, and 566 respectively. The voltages produced by I-TO-V circuits 402 from the currents received at conductors 560, 562, 564, and 566, are applied to conductors 550, 552, 554, and 556 respectively.

The voltages applied to these conductors, 550-556, reflect the combined electric fields of both styli 502 and 504. By appropriately multiplexing the signals onto conductors 550-556, independent pen selection circuit 500 can demultiplex the signals to determine the signals generated by each of the individual styli 502 and 504. The isolated signals for each of the individual styli 502 and 504 are directed to an associated position calculation circuit 514-518 to determine the absolute position of the associated tip 506 or 508 on ITO writing surface 300. Specifically, as shown in FIG. 5, signals isolated by independent pen selection circuit 500 which are generated by pen 502 are applied over path 568 to position calculation circuit 514. Simultaneously, isolated signals from pen 504 are applied over path 568 to position calculation circuit 516.

The position information calculated by position calculation circuits 514-518 is then applied to path 570 as input to the computer utilization I/O interface 520 embedded within a data processing system. The data processing system utilizes the position information derived from the multiple styli 502 and 504. Other circuits and software associated with computer utilization interface 520 direct appropriate graphical information to the display of the data processing system over bus 572. The precise information directed to the display is dependent upon particular applications being used in conjunction with computer utilization I/O interface 520.

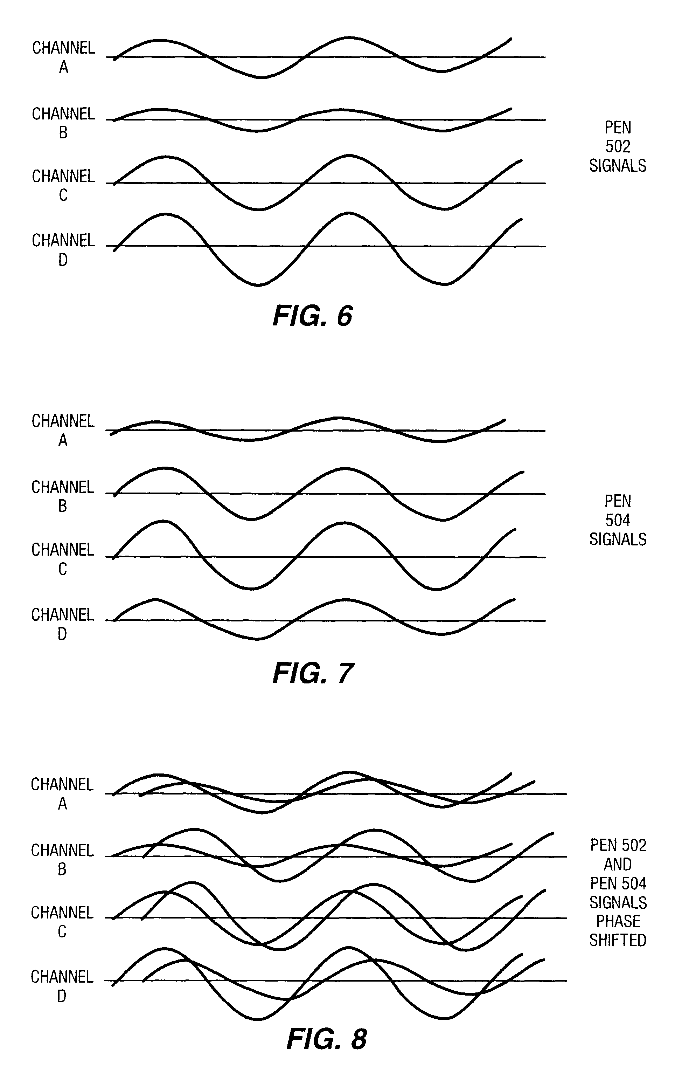

FIGS. 6 and 7 depict exemplary signals corresponding approximately to the pen positions 502 and 504 on ITO writing surface 300 of FIG. 5. Stylus 502 is furthest from point B of the four corners of ITO writing surface 300, and closest to point D on ITO writing surface 300. Points A and C on ITO writing surface 300 are intermediate distances from stylus 502 with respect to points B and D. The signals plotted in FIG. 6 are approximately representative of the amplitude of current flowing from the tip of 506 of stylus 502 to each of the four corners, A, B, C, and D, of ITO writing surface 300. Since the corner B of the ITO writing surface 300 is furthest from tip 506 of stylus 502, its corresponding graph in FIG. 6 channel D reflects to lowest amplitude of alternating current flowing to point B of ITO writing surface 300. The graph labeled channel D of FIG. 6 corresponds to the highest amplitude of alternating current received at any of the four corners of ITO writing surface 300, namely the current flow to from stylus 502 to the closest point D. Points A and C of ITO writing surface 300 are intermediate distances from stylus 502 relative to points B and D, and therefore reflect intermediate amplitudes of alternating current received at their respective corners.

FIG. 7 depicts graphs representative of the approximate alternating current flow received at each of the four corners of ITO writing surface 300 as induced by tip 508 of stylus 504. Point A of ITO writing surface 300 is furthest from tip 508 of stylus 504 and therefore the corresponding graph channel A in FIG. 7 depicts the lowest relative alternating current flow to any of the four corners of ITO writing surface 300. The graph channel C in FIG. 7 corresponds to the alternating current received at point C of ITO writing surface 300 which is closest to tip 508 of stylus 504 and therefore receives the largest relative amplitude of alternating current. Points B and D of ITO writing surface 300 are intermediate distances from tip 508 of stylus 504 relative to the distances to points A and C. The graphs of FIG. 7 indicating channel B and channel D therefore depict alternating current amplitudes intermediate that indicated for channels A and C.

Signals depicted in FIG. 6 corresponding to stylus 502 are applied to paths 560-566, converted to voltages by I-TO-V circuits 402, applied to paths 550-556, received by independent pen selection circuit 500, and then applied over path 568 to position calculation element 514 to determine the absolute position of stylus 502 on ITO writing surface 300. Similarly, signals indicated by FIG. 7 are applied to paths 560-566, converted to voltages by I-TO-V circuits 402, applied to paths 550-556, received by independent pen selection circuit 500 and directed over path 568 to position calculation element 516 for computation of the absolute position of stylus 504 on ITO writing surface 300. The signals shown in FIGS. 6 and 7 are combined (superposed) on paths 550-556 and 560-566. Independent pen selection circuit 500 demultiplexes the signals to distinguish and isolate the signals generated by stylus 502 from those of stylus 504. Independent pen selection circuit 500 applies any of several well known signal multiplexing/demultiplexing techniques. One of ordinary skill in the art will readily recognize several methods appropriate for multiplexing signals onto conductive paths 550-556 and 560-566 such that independent pen selection circuit 500 may appropriately demultiplex the signals.

Any of several well known multiplexing techniques may be applied within the scope of the present invention to multiplex signals of each of a plurality of styli applying alternating electric fields to writing surface 300. One such exemplary multiplexing technique is the use of frequency division multiplexing to apply a plurality of signals to a single conductor wherein each signal utilizes a particular frequency. Specifically, the two channel A signals shown in FIGS. 6 and 7, may be applied to conductor 550 of FIG. 5, at each of two different frequencies. A first band of frequencies may be used to represent the signals on channel A corresponding to the alternating electric field generated by tip 506 of stylus 502. A second band of frequencies may be used to represent the signals on channel A generated by tip 508 of stylus 504 on ITO writing surface 300. It will be appreciated that a plurality of such frequencies may be utilized to represent two or more styli applying alternating electric fields to ITO writing surface 300. Similar frequency division (frequency bands) serves to multiplex signals from each of a plurality of styli onto each of the other channels (B, C, and D) at each of the corresponding corners of ITO writing surface 300. Independent pen selection circuit 500 then demultiplexes the signals from each of the four channels as applied to conductive paths 550-556 by filtering each of the expected frequency ranges corresponding to each of the plurality of styli. Several analog or digital techniques are well known to those of ordinary skill in the art to provide such frequency division multiplexing and demultiplexing.

Time division multiplexing is another well known technique for applying a plurality of signals to a common conductor. When multiple styli are connected with common signal paths to a common set of control electronics as depicted in FIG. 2, a common time base signal may be applied to all styli. This time base signal may be used by each stylus in generating their respective alternating electric fields. The common time base signal is also applied to independent pen selection circuit 500 of FIG. 5. In this manner, all styli and the independent pen selection circuit 500 share a synchronized common time base signal. Each stylus may be assigned a specific time period ("time slot") in which its signal is applied to the common conductors (550-556 and 560-566). Using this synchronized time based signal, each of the multiple styli may be isolated and identified by the time slot in which their respective signals are to be applied on the common conductive path. During a first time period a first stylus will apply its alternating current electric field to the common conductor if it is presently in use. During a second through N'th time period the second through N'th styli may each apply their corresponding alternating electric field signals to the common conductive path if they are presently in use. Operating in conjunction with the common synchronized time base, the independent pen selection circuit 500 of FIG. 5 then demultiplexes the signals by simply associating the sampling of a signal during each time period with the corresponding one of the plurality of multiple styli. Such time division multiplexing techniques are well known to those of ordinary skill in the art and therefore need not be discussed further in this patent.

FIG. 8 depicts another possible approach to multiplexing a plurality of signals on common conductive paths. In FIG. 8 the signals generated by stylus 502 and stylus 504 are combined on the four conductive paths labeled channels A-D. The signals corresponding to stylus 504 are phase shifted relative to those generated by stylus 502 by a fixed offset. As discussed above, when as in FIG. 2 the control electronics and styli share common control circuit paths, a common frequency source may be used for each stylus. Each stylus then applies its own unique fixed phase offset in generation of its fixed frequency alternating electric field. The first stylus applies a zero phase offset when generating its alternating electric field at the supplied common fixed frequency. The second through N'th styli each apply a different and unique phase offset to the common fixed frequency alternating electric field generated. With such a fixed frequency and fixed known phase offsets between the multiple styli, independent pen selection circuit 500 of FIG. 5 may isolate the signals corresponding to each stylus by recognizing the phase offset relationship of the signals on the common conductive paths. Analog and digital techniques for such phase offset multiplexing are well known to those of ordinary skill in the art and need not be discussed further.

An additional approach to identifying multiple styli in the present invention is to generate a unique identification sequence of pulsed data from each of the multiple styli. The encoding of serial data on a conductive path is well known to those of ordinary skill in the art. Asynchronous transmission techniques which denote the start of a data sequence with a start bit or flag and signify the end with a stop bit or flag may be used to isolate the transmission of the identification data sequence from the alternating electric field signals. Techniques such as carrier detection and collision sensing may be used in conjunction with each stylus to avoid loss of data due to simultaneous transmissions of information by multiple styli. These and other techniques for transmitting an identification data sequence are well known to those of ordinary skill in the electronic communication arts.

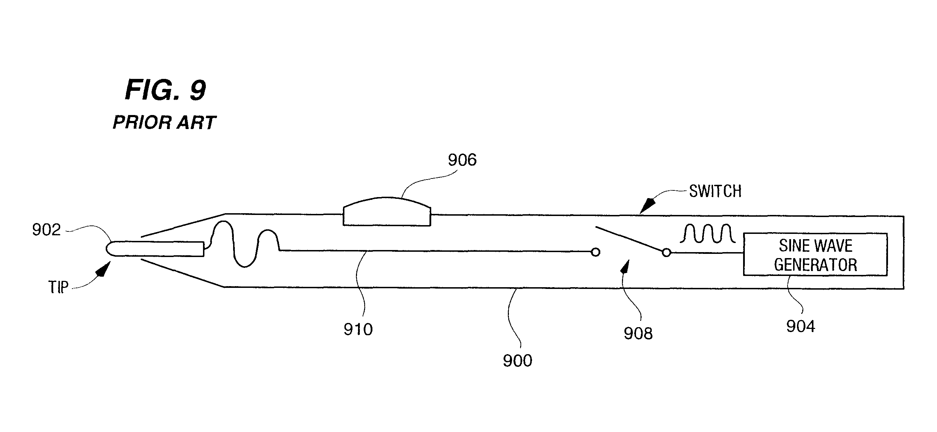

FIG. 9 depicts a stylus 900 which may be utilized in the present invention to generate an alternating electric field signal at its tip 902. A switch 908, actuated by a user depressing button 906, applies the alternating electric field generated by sine wave generator 904 onto conductor 910. The alternating electric field is thus connected to tip 902 which may then be applied to a writing surface as in FIG. 5. One of ordinary skill in the art will readily recognize that switch 908 and its actuation by button 906 are merely exemplary of many equivalent switch designs. For example, tip 902 may itself be a switch which is spring biased in a first (i.e. open) position and moved to a second (i.e. closed) position by depressing the tip 902 into stylus 900 by pushing the tip 902 against the writing surface. In addition, the switch 908 may be associated with an activation signal input to sine wave generator 904 such that closing the switch 908 enables sine wave generation while opening the switch disables the signal generation.

As discussed above, stylus 900 may be battery powered (not shown) for cordless operation as shown in FIG. 1 or may be attached by a cable to a central processing unit for desktop applications as shown in FIG. 2. It will be appreciated that sine wave generator 904 may be customizable so that each stylus may be assigned a unique frequency, or a unique phase relationship with respect to other styli. Techniques well known to those of ordinary skill in the art may be utilized to permit an end user of stylus 900 to customize the functioning of sine wave generator 904. For example, DIP switches or rotary switches may be used to permit an end user to select among various preset configurations which identify the stylus by a unique frequency generated by sine wave generator 904 or a unique phase offset applied to the sine wave signal. With each stylus customized to a particular, uniquely identifying configuration of the sine wave generator 904, the independent pen selection circuit 500 of FIG. 5 may then demultiplex the plurality of electric fields applied to at a writing surface by a plurality of styli. This isolates the electric signals of each individual stylus to permit detection of the position of each of a plurality of styli in simultaneous use.

While the invention has been illustrated and described in detail in the drawings and foregoing description, such illustration and description is to be considered as exemplary and not restrictive in character, it being understood that the present invention is not restricted to the details of the foregoing embodiments.

## Claims

1. Graphical input apparatus (300, 502, 504,) for a computer system (100, 200) and comprising a stylus (502, 504) arranged to be moved within a range of geometric coordinates, means (402) for sensing the geometric coordinates of said stylus (502, 504), and means (500, 514, 516, 518) for communicating said coordinates to said computer system (100, 200), characterised in that said stylus (502, 504) includes means for distinguishing said stylus from other styli of said apparatus and determing means (500) associated with the sensing means (402) and said means distinguishing said stylus and for determining the geometric coordinates of each of said styli (502, 504).

2. Apparatus as claimed in claim 1, comprising means for modulating a unique identification data sequence for each of said plurality of styli (502, 504) and means for applying said signal to a common conductor (300, 550-556), and
means for demodulating said unique identification data sequence retrieved from said common conductor (300, 550-556).

3. Apparatus as claimed in claim 1, wherein said means for distinguishing comprises frequency division multiplexing means and frequency division demultiplexing means.

4. Apparatus as claimed in claim 1, wherein said means for distinguishing comprises division multiplexing means and time division demultiplexing means.

5. Apparatus as claimed in claim 1, wherein said means for distinguishing comprises multiplexing means for combining a plurality of signals having a selected phase offset and
demultiplexing means for isolating each of said signals having a selected phase offset.

6. A graphical input method for a computer system (100, 200) comprising determining the geometric location of a stylus (503, 504) and communicating said geometric location to said computer system (100, 200) and characterised by the step of:
distinguishing said stylus from each of a plurality of styli by a characteristic unique to each of said plurality of styli.

7. A method as claimed in claim 6, comprising
modulating a unique identification data signal for each of said plurality of styli (502, 504) and applying said modulated signal to a common conductor; and
demodulating said unique identification data signal retrieved from said common conductor.

8. A method as claimed in claim 7, and including the step of
combining a plurality of said signals by operation of frequency division multiplexing means; and
the step of isolating each of said signals by operation of frequency division demultiplexing means

9. A method as claimed in claim 7, and including the step of:
combining a plurality of said signals by operation of time division multiplexing means; and the step of
isolating each of said signals by operation of time division demultiplexing means.

10. A method as claimed in claim 7, and including the step of:
combining a plurality of said signals having a selected phase offset applied to a common conductor by operation of multiplexing means, and the step of
isolating each of said signals having a selected phase offset by operation of demultiplexing means.
